# EUROPEAN PATENT APPLICATION

(11) **EP 4 455 860 A1**
(43) Date of publication of application: **30.10.2024**
(21) Application number: 23762813.6
(22) Date of filing: 23.02.2023
(51) Int. Cl.: G06F 8/30

(54) **APPLICATION DEVELOPMENT SYSTEM AND METHOD, AND DEVICE**

(30) Priority: 01.03.2022 CN 202210195864
(71) Applicant: Huawei Technologies Co., Ltd., Shenzhen, Guangdong 518129 (CN)
(72) Inventor: XU, Bei, Shenzhen, Guangdong 518129 (CN); ZHAO, Yongjie, Shenzhen, Guangdong 518129 (CN); WANG, Xiangyang, Shenzhen, Guangdong 518129 (CN); ZHOU, Kai, Shenzhen, Guangdong 518129 (CN); LI, Hong, Shenzhen, Guangdong 518129 (CN)
(74) Representative: MERH-IP Matias Erny Reichl Hoffmann Patentanwälte PartG mbB
(86) International application number: PCT/CN2023/077966
(87) International publication number: WO 2023/165413

(57) **Abstract**

This application provides an application development system and method, and a device. In the application development system, a first electronic device sends an original installation package of a target application to a server, where the original installation package of the target application indicates a function and/or a page layout corresponding to at least one type of device information. The server determines at least one target installation package based on the original installation package, where the at least one target installation package one-to-one corresponds to the at least one type of device information. The server receives a first download request sent by a second electronic device, and sends a first installation package to the second electronic device, where the first installation package is a target installation package corresponding to device information of the second electronic device; and the server receives a second download request sent by a third electronic device, and sends a second installation package to the third electronic device, where the second installation package is a target installation package corresponding to device information of the third electronic device. Based on the foregoing application development system, a plurality of types of installation packages of a same application do not need to be released a plurality of times, thereby reducing development costs.

## Description

### CROSS-REFERENCE TO RELATED APPLICATIONS

This application claims priority to Chinese Patent Application No. 202210195864.8, filed with the China National Intellectual Property Administration on March 1, 2022 and entitled "APPLICATION DEVELOPMENT SYSTEM AND METHOD, AND DEVICE", which is incorporated herein by reference in its entirety.

### TECHNICAL FIELD

This application relates to the field of terminal technologies, and in particular, to an application development system and method, and a device.

### BACKGROUND

With development of terminal technologies, types of electronic devices tend to be diversified, and more intelligent electronic devices are widely used. For example, a user may have both a smartphone and a smart watch. An application may be installed on both the smartphone and the smart watch, and the user can use, on the smartphone, a function provided by the application, and can use, on the smart watch, a function provided by the application.

Different types of electronic devices support different functions, and displays of different electronic devices may have different sizes or shapes. Therefore, an application developer needs to design different installation packages for different types of electronic devices, and release a plurality of installation packages of a same application on an application market a plurality of times.

### SUMMARY

This application provides an application development system and method, and a device, to reduce application development costs and flexibly implement application development, download, and installation.

According to a first aspect, this application provides an application development system, where the application development system includes a first electronic device, a second electronic device, a third electronic device, and a server;
the first electronic device is configured to send an original installation package of a target application to the server, and the original installation package of the target application indicates a function corresponding to at least one type of device information and/or a page layout corresponding to at least one type of device information;
the server is configured to: receive the original installation package, of the target application, sent by the first electronic device, and determine at least one target installation package based on the original installation package, where the at least one target installation package one-to-one corresponds to the at least one type of device information, and each target installation package has a function and/or a page layout corresponding to one type of device information; receive a first download request sent by the second electronic device, where the first download request is used to request to download an installation package of the target application; send a first installation package to the second electronic device, where the first installation package is a target installation package that is in the at least one target installation package and that corresponds to device information of the second electronic device; receive a second download request sent by the third electronic device, where the second download request is used to request to download an installation package of the target application; and send a second installation package to the third electronic device, where the second installation package is a target installation package that is in the at least one target installation package and that corresponds to device information of the third electronic device;
the second electronic device is configured to: send the first download request to the server, and receive the first installation package sent by the server; and
the third electronic device is configured to: send the second download request to the server, and receive the second installation package sent by the server.

Based on the foregoing application development system, an application developer may upload the original installation package to the server by using the first electronic device, the server may generate the at least one target installation package based on the original installation package, and each target installation package corresponds to a piece of device information. Therefore, the developer does not need to release a plurality of types of installation packages of a same application a plurality of times, thereby reducing development costs, and improving efficiency of application development. In addition, in the application development method provided in this application, electronic devices having different device information request to download different target installation packages from the server, so that a target installation package downloaded by an electronic device can be applicable to the electronic device, thereby ensuring that the electronic device can normally run the target application without downloading data irrelevant to the electronic device and, saving storage resources of the electronic device.

In a possible design, the first installation package and the second installation package satisfy at least one of the following conditions: A data amount of the first installation package is different from a data amount of the second installation package, a package name of the first installation package is different from a package name of the second installation package, a function file in the first installation package is different from a function file in the second installation package, and a layout file in the first installation package is different from a layout file in the second installation package.

According to this design, different electronic devices request to download different installation packages from the server, and an installation package obtained by each electronic device is an installation package that adapts to the target application of the electronic device. This ensures that the target application can be run normally.

In a possible design, the second electronic device is further configured to: before sending the first download request to the server, send the device information of the second electronic device to the server, and receive information that is sent by the server and that is of an application whose running is supported by the second electronic device; and display the information of the application whose running is supported by the second electronic device;
the third electronic device is further configured to: before sending the second download request to the server, send the device information of the third electronic device to the server, and receive information that is sent by the server and that is of an application whose running is supported by the third electronic device; and display the information of the application whose running is supported by the third electronic device; and
the server is further configured to: receive the device information of the second electronic device sent by the second electronic device, and send, to the second electronic device, the information of the application whose running is supported by the second electronic device; and receive the device information of the third electronic device sent by the third electronic device, and send, to the third electronic device, the information of the application whose running is supported by the third electronic device.

According to this design, the electronic device may send the device information of the electronic device to the server, receive the information that is returned by the server and that is of the application whose running is supported by the electronic device, and display the information of the application whose running is supported by the electronic device, so that a user can select the target application, for downloading, from applications whose running is supported by the electronic device.

In a possible design, the server is specifically configured to: split and compile the original installation package based on a syntax notation in the original installation package, to obtain the at least one target installation package.

According to this design, the server can split the original installation package, and the developer does not need to upload a plurality of installation packages to the server, thereby reducing development costs and improving efficiency of application development.

In a possible design, the first installation package includes a function file corresponding to the device information of the second electronic device and/or a layout file corresponding to the device information of the second electronic device, and the layout file corresponding to the device information of the second electronic device includes a display resource corresponding to the device information of the second electronic device; and the second installation package includes a function file corresponding to the device information of the third electronic device and/or a layout file corresponding to the device information of the third electronic device, and the layout file corresponding to the device information of the third electronic device includes a display resource corresponding to the device information of the third electronic device.

According to this design, the installation package obtained by the electronic device includes the function file and/or the layout file corresponding to the device information of the electronic device, and the layout file may include the display resource corresponding to the device information of the electronic device. Therefore, after the electronic device downloads and installs the installation package of the target application, a function supported by the electronic device can be provided for a user, and a display interface matching the electronic device can be displayed.

In a possible design, the device information includes at least one of a device type and a screen parameter.

In a possible design, the screen parameter includes at least one of a screen shape, a screen size, and a screen resolution.

According to this design, the developer can design installation packages corresponding to different device types or screen parameters, so that the server can obtain, through splitting, installation packages corresponding to a plurality of types of device information. This facilitates promotion of the target application and reduces development costs.

In a possible design, the second electronic device is further configured to: after receiving the first installation package sent by the server, download the first installation package, and install the target application on the second electronic device based on the first installation package; or after receiving the first installation package sent by the server, download the first installation package, and display a service widget of the target application on the second electronic device based on the first installation package; and
the third electronic device is further configured to: after receiving the second installation package sent by the server, download the second installation package, and install the target application on the third electronic device based on the second installation package; or after receiving the second installation package sent by the server, download the second installation package, and display a service widget of the target application on the third electronic device based on the second installation package.

According to this design, the electronic device may install the target application on the electronic device based on the obtained installation package of the target application, or may further display the service widget of the target application based on the installation package of the target application. This provides various application experience for the user.

In a possible design, the second electronic device is any one of an intelligent terminal device, an intelligent wearable device, a light intelligent wearable device, an internet of things device, or an intelligent vehicle-mounted device; and the third electronic device is any one of an intelligent terminal device, an intelligent wearable device, a light intelligent wearable device, an internet of things device, or an intelligent vehicle-mounted device.

The intelligent wearable device may be, for example, a smart watch, and the light intelligent wearable device may be, for example, a sports watch.

According to a second aspect, this application provides an application development method, applied to an electronic device, where the method includes: sending a first download request to a server, where the first download request is used to request to download an installation package of a target application; and receiving a first installation package sent by the server, where the first installation package is a target installation package corresponding to device information of the electronic device, and the target installation package is determined by the server based on an original installation package of the target application.

In a possible design, before the sending a first download request to a server, the method further includes: sending the device information of the electronic device to the server, and receiving information that is sent by the server and that is of an application whose running is supported by the electronic device; and displaying the information of the application whose running is supported by the electronic device.

In a possible design, the first installation package includes a function file corresponding to the device information of the electronic device and/or a layout file corresponding to the device information of the electronic device, and the layout file corresponding to the device information of the electronic device includes a display resource corresponding to the device information of the electronic device.

In a possible design, the device information includes at least one of a device type and a screen parameter.

In a possible design, the screen parameter includes at least one of a screen shape, a screen size, and a screen resolution.

In a possible design, after the receiving a first installation package sent by the server, the method further includes: downloading the first installation package, and installing the target application on the electronic device based on the first installation package; or downloading the first installation package, and displaying a service widget of the target application on the electronic device based on the first installation package.

According to a third aspect, this application provides an application development method, applied to a server, where the method includes: receiving an original installation package, of a target application, sent by a first electronic device, where the original installation package of the target application indicates a function corresponding to at least one type of device information and/or a page layout corresponding to at least one type of device information; determining at least one target installation package based on the original installation package, where the at least one target installation package one-to-one corresponds to the at least one type of device information, and each target installation package has a function and/or a page layout corresponding to one type of device information; receiving a first download request sent by a second electronic device, where the first download request is used to request to download an installation package of the target application; and sending a first installation package to the second electronic device, where the first installation package is a target installation package that is in the at least one target installation package and that corresponds to device information of the second electronic device; and receiving a second download request sent by a third electronic device, where the second download request is used to request to download an installation package of the target application, and sending a second installation package to the third electronic device, where the second installation package is a target installation package that is in the at least one target installation package and that corresponds to device information of the third electronic device.

In a possible design, the first installation package and the second installation package satisfy at least one of the following conditions: A data amount of the first installation package is different from a data amount of the second installation package; a package name of the first installation package is different from a package name of the second installation package; a function file in the first installation package is different from a function file in the second installation package; and a layout file in the first installation package is different from a layout file in the second installation package.

In a possible design, the method further includes: receiving the device information of the second electronic device sent by the second electronic device, and sending, to the second electronic device, information of an application whose running is supported by the second electronic device; and receiving the device information of the third electronic device sent by the third electronic device, and sending, to the third electronic device, information of an application whose running is supported by the third electronic device.

In a possible design, the determining at least one target installation package based on the original installation package includes: splitting and compiling the original installation package based on a syntax notation in the original installation package, to obtain the at least one target installation package.

In a possible design, the first installation package includes a function file corresponding to the device information of the second electronic device and/or a layout file corresponding to the device information of the second electronic device, and the layout file corresponding to the device information of the second electronic device includes a display resource corresponding to the device information of the second electronic device; and the second installation package includes a function file corresponding to the device information of the third electronic device and/or a layout file corresponding to the device information of the third electronic device, and the layout file corresponding to the device information of the third electronic device includes a display resource corresponding to the device information of the third electronic device.

In a possible design, the device information includes at least one of a device type and a screen parameter.

In a possible design, the screen parameter includes at least one of a screen shape, a screen size, and a screen resolution.

According to a fourth aspect, this application provides an electronic device, where the electronic device includes a plurality of functional modules, and the plurality of functional modules interact with each other to implement the method performed by the second electronic device or the third electronic device according to any one of the foregoing aspects and the implementations of the foregoing aspects. The plurality of functional modules may be implemented based on software, hardware, or a combination of software and hardware, and the plurality of functional modules may be randomly combined or divided based on specific implementation.

According to a fifth aspect, this application provides an electronic device, including at least one processor and at least one memory, where the at least one memory stores computer program instructions, and when the electronic device runs, the at least one processor performs the method performed by the second electronic device or the third electronic device according to any one of the foregoing aspects and the implementations of the foregoing aspects.

According to a sixth aspect, this application provides a server, where the server includes a plurality of functional modules, and the plurality of functional modules interact with each other to implement the method performed by the server according to any one of the foregoing aspects and the implementations of the foregoing aspects. The plurality of functional modules may be implemented based on software, hardware, or a combination of software and hardware, and the plurality of functional modules may be randomly combined or divided based on specific implementation.

According to a seventh aspect, this application provides a server, including at least one processor and at least one memory, where the at least one memory stores computer program instructions, and when the server runs, the at least one processor performs the method performed by the server according to any one of the foregoing aspects and the implementations of the foregoing aspects.

According to an eighth aspect, this application further provides a computer program, where when the computer program is run on a computer, the computer is enabled to perform the method performed by the second electronic device, the third electronic device, or the server according to any one of the foregoing aspects and the implementations of the foregoing aspects.

According to a ninth aspect, this application further provides a computer-readable storage medium, where the computer-readable storage medium stores a computer program, and when the computer program is executed by a computer, the computer is enabled to perform the method performed by the second electronic device, the third electronic device, or the server according to any one of the foregoing aspects and the implementations of the foregoing aspects.

According to a tenth aspect, this application further provides a chip, where the chip is configured to read a computer program stored in a memory, to perform the method performed by the second electronic device, the third electronic device, or the server according to any one of the foregoing aspects and the implementations of the foregoing aspects.

According to an eleventh aspect, this application further provides a chip system, where the chip system includes a processor, configured to support a computer apparatus in implementing the method performed by the second electronic device, the third electronic device, or the server according to any one of the foregoing aspects and the implementations of the foregoing aspects. In a possible design, the chip system further includes a memory, and the memory is configured to store a program and data that are necessary for the computer apparatus. The chip system may include a chip or may include a chip and another discrete component.

### BRIEF DESCRIPTION OF DRAWINGS

FIG. 1 is a diagram of a scenario of releasing and downloading an installation package of an application to which an embodiment of this application is applicable;
FIG. 2 is a diagram of different watch face shapes and resolutions according to an embodiment of this application;
FIG. 3 is a diagram of an interface of service widgets according to an embodiment of this application;
FIG. 4 is a diagram of an interface for displaying a service widget on a smart watch according to an embodiment of this application;
FIG. 5 is a diagram of a display interface on which rectangular display resources are displayed on a circular watch;
FIG. 6 is a diagram of a structure of an electronic device according to an embodiment of this application;
FIG. 7 is a block diagram of a software structure of an electronic device according to an embodiment of this application;
FIG. 8 is a diagram of a structure of an original installation package of a target application according to an embodiment of this application;
FIG. 9 is a diagram of a manner of generating a target installation package according to an embodiment of this application;
FIG. 10A is a diagram of functions of a music application according to an embodiment of this application;
FIG. 10B is a diagram of resolutions corresponding to display resources of a music application according to an embodiment of this application;
FIG. 11 is a diagram in which a server determines at least one target installation package according to an embodiment of this application;
FIG. 12 is a diagram in which a server determines at least one target installation package according to an embodiment of this application;
FIG. 13 is a diagram of weather service widgets displayed on a smartphone and a smart watch according to an embodiment of this application; and
FIG. 14 is a flowchart of an application development method according to an embodiment of this application.

### DESCRIPTION OF EMBODIMENTS

To make objectives, technical solution, and advantages of embodiments of this application clearer, the following further describes embodiments of this application in detail with reference to accompanying drawings. Terms "first" and "second" below in descriptions of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

It should be understood that in embodiments of this application, "at least one" means one or more, and "a plurality of" means two or more. A term "and/or" describes an association relationship between associated objects, and indicates that three relationships may exist. For example, A and/or B may indicate the following cases: Only A exists, both A and B exist, and only B exists, where A and B may be singular or plural. A character "/" usually indicates an "or" relationship between the associated objects. "At least one of the following (items) pieces" or a similar expression thereof refers to any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

With development of terminal technologies, types of electronic devices tend to be diversified, and more and more intelligent electronic devices are widely used. An increase in types of electronic devices that can be supported by a same operating system enables an ecosystem of the operating system to develop and flourish rapidly. For example, the HarmonyOS is a distributed operating system oriented to all scenarios. The HarmonyOS may support electronic devices such as a mobile phone, a computer, a tablet computer, a television, an industrial automation control device, a self driving device, a head unit device, and an intelligent wearable device.

An application market may be installed on the electronic device. The application market is a platform for displaying and downloading application programs. The application market may be used by a developer to upload an installation package of a developed application, and a user may download and install the application on the electronic device. For ease of description, an application in embodiments of this application may also be referred to as an application for short.

The following describes a scenario to which embodiments of this application are applicable.

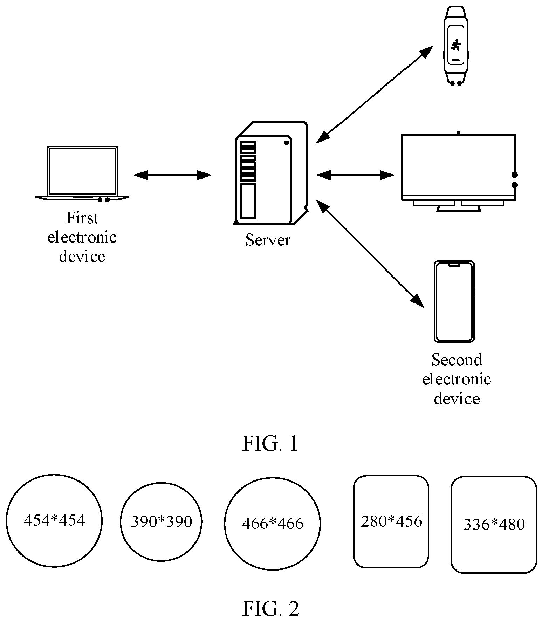

FIG. 1 is a diagram of a scenario of releasing and downloading an installation package of an application according to an embodiment of this application. Refer to FIG. 1. After designing the application, an application developer may send the installation package of the application to a server by using a first electronic device in the scenario shown in FIG. 1, and the server may push the application to an application market client. A user may operate a second electronic device to search for the application on an application market client installed on the second electronic device. The second electronic device may download and install the installation package of the application. Refer to FIG. 1. When types of the second electronic device are different, functions that can be supported may also be different, and shapes or sizes of displays may also be different. In this case, the application developer needs to design different installation packages for different types of electronic devices, and release the plurality of installation packages of the same application on the application market a plurality of times. It can be learned that this manner requires high application development costs, and has a complex development operation.

For example, the HarmonyOS supports two types of smart wearable devices: a sports watch and a smart watch. Capabilities opened by the sports watch and the smart watch to the developer differ greatly. For example, the smart watch supports network connection capability openness, while the sports watch does not support the network connection capability openness. To enable an application to support the two types of devices, the developer needs to separately design installation packages of the application for the two types of devices and release the packages on the application market twice.

In addition, watch face shapes and resolutions of the sports watch and the smart watch are different. FIG. 2 is a diagram of different watch face shapes and resolutions according to an embodiment of this application. It can be seen from FIG. 2 that electronic devices have a plurality of types of screen shapes and resolutions. As a result, a developer needs to separately develop installation packages of an application for the watch face shapes and resolutions, and release the installation packages of the application on an application market a plurality of times.

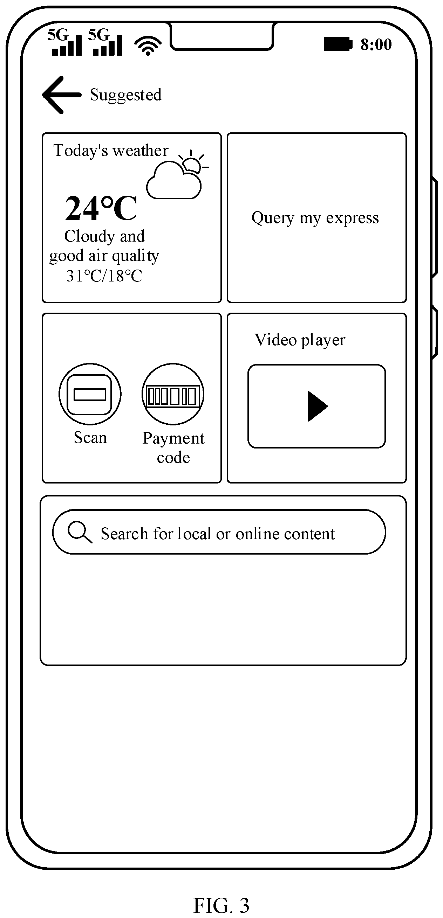

In another application scenario provided in embodiments of this application, an operating system may provide an interface display form for displaying service widgets of application interfaces. For example, FIG. 3 is a diagram of an interface of service widgets according to an embodiment of this application. On the interface shown in FIG. 3, the service widgets of a plurality of applications may be displayed. The interface shown in FIG. 3 includes a service widget of a weather application, a service widget of an express query application, a service widget of a video player, and the like. In the service widget of each application, important information or an operation of the application may be displayed, so that a user can view a message or perform an operation, to implement effect of a direct service and reduced user experience levels. Optionally, the user may operate to add a service widget of an application to a display interface of an electronic device. If the application is not installed on the electronic device, the electronic device may request to download an installation package of the application from a server. After the installation package of the application is downloaded, the service widget of the application may be displayed on a display of the electronic device based on the installation package of the application.

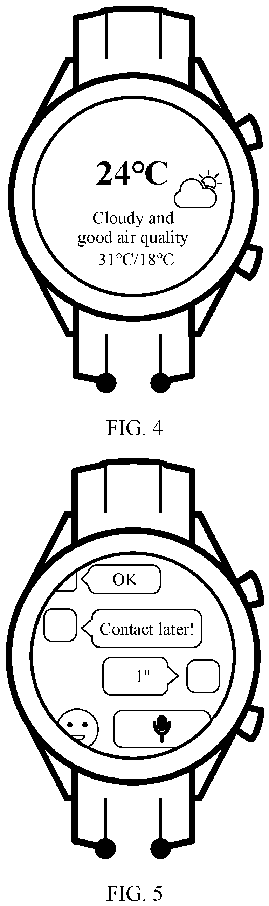

Because different electronic devices may have different screen shapes and screen resolutions, if different types of electronic devices display a same service widget, some electronic devices may fail to display the entire service widget, thereby bringing strange experience to a user. For example, the weather application is used as an example. On the interface shown in FIG. 3, a shape of the service widget of the weather application is a square. FIG. 4 is a diagram of an interface for displaying a service widget on a smart watch according to an embodiment of this application. Refer to FIG. 4. When displaying the service widget of the weather application, the smart watch needs to display a circular service widget. Therefore, an application developer needs to set corresponding service widgets for screen shapes and screen resolutions of various types of electronic devices, and include the service widgets as display resources in installation packages of the application, so that the various types of electronic devices can display the service widgets matching the screens.

In an optional implementation, the installation package of the application may include display resources or logic code blocks that correspond to a plurality of device types. For example, macro control is added to the installation package to distinguish the display resources or the logic code blocks that correspond to the different device types. The macro control may be an operating system that supports the different device types. For example, the macro control may be a television operating system, an intelligent wearable operating system, a terminal operating system, or the like. After an application is installed on an electronic device, a display resource or a logic code block that corresponds to a device type in an installation package may be selectively enabled based on the device type of the electronic device, and the resource is displayed on a display interface, or a function corresponding to the logic code block is implemented. In this implementation, the installation package, of the application, downloaded by the electronic device includes the display resource and the logic code block that correspond to the device type of the electronic device, and also includes a display resource and a logic code block that correspond to another device type. This causes a waste of storage resources. In addition, in this implementation, the electronic device needs to have large storage space, and this implementation is not applicable to an electronic device with limited storage space.

In another optional implementation, when a second electronic device requests to download an installation package of an application from a server, the server may create a plurality of installation packages based on a plurality of types of screen sizes or screen resolutions, and each installation package is applicable to a specific screen size or screen resolution. However, in this implementation, the second electronic device needs to support flexible layout and display of vector graphics. When the second electronic device supports display of display resources in a plurality of types of shapes, the second electronic device needs to download a plurality of installation packages. Otherwise, a display exception occurs. For example, FIG. 5 is a diagram of a display interface on which rectangular display resources are displayed on a circular watch. Refer to FIG. 5. When the rectangular display resources are displayed on the circular watch, the display resource is blocked. This affects user experience. In addition, downloading the plurality of installation packages by the second electronic device may further result in that the second electronic device needs a large quantity of resources for running the application, and this implementation cannot be applied to a device with limited storage space.

Based on the foregoing problem, embodiments of this application provide an application development method. The method may be applicable to the scenario shown in FIG. 1. In the application development method provided in embodiments of this application, a server receives an original installation package, of a target application, uploaded by a first electronic device, where the original installation package of the target application indicates a function corresponding to at least one type of device information and/or a page layout corresponding to at least one type of device information. The server determines at least one target installation package based on the original installation package of the target application, where the at least one target installation package one-to-one corresponds to the at least one type of device information, and each target installation package has a function and/or a page layout corresponding to one type of device information. The server receives a first download request sent by a second electronic device, and the server sends a first installation package to the second electronic device, where the first installation package is a target installation package that is in the at least one target installation package and that corresponds to device information of the second electronic device. The server may further receive a second download request sent by a third electronic device, and the server sends a second installation package to the third electronic device, where the second installation package is a target installation package that is in the at least one target installation package and that corresponds to device information of the third electronic device. According to the application development method provided in embodiments of this application, an application developer may upload, to the server, the original installation package including a plurality of types of function parameters and layout files, the server may generate the at least one target installation package based on the original installation package, and each target installation package corresponds to a piece of device information. Therefore, the developer does not need to release a plurality of types of installation packages of a same application a plurality of times, thereby reducing development costs, and improving efficiency of application development. In addition, in the application development method provided in this application, electronic devices having different device information request to download different target installation packages from the server, so that a target installation package downloaded by an electronic device can be applicable to the electronic device, thereby ensuring that the electronic device can normally run the target application without downloading data irrelevant to the electronic device, and saving storage resources of the electronic device.

It should be noted that, in the scenario shown in FIG. 1, the server may be a cloud server in the application market, or may be a server provided by an electronic device manufacturer. This is not limited in embodiments of this application. The electronic device in embodiments of this application may be a tablet computer, a mobile phone, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, a personal digital assistant (personal digital assistant, PDA), a wearable device, an internet of things (internet of things, IoT) device, a head unit, or the like. A specific type of the electronic device is not limited in embodiments of this application.

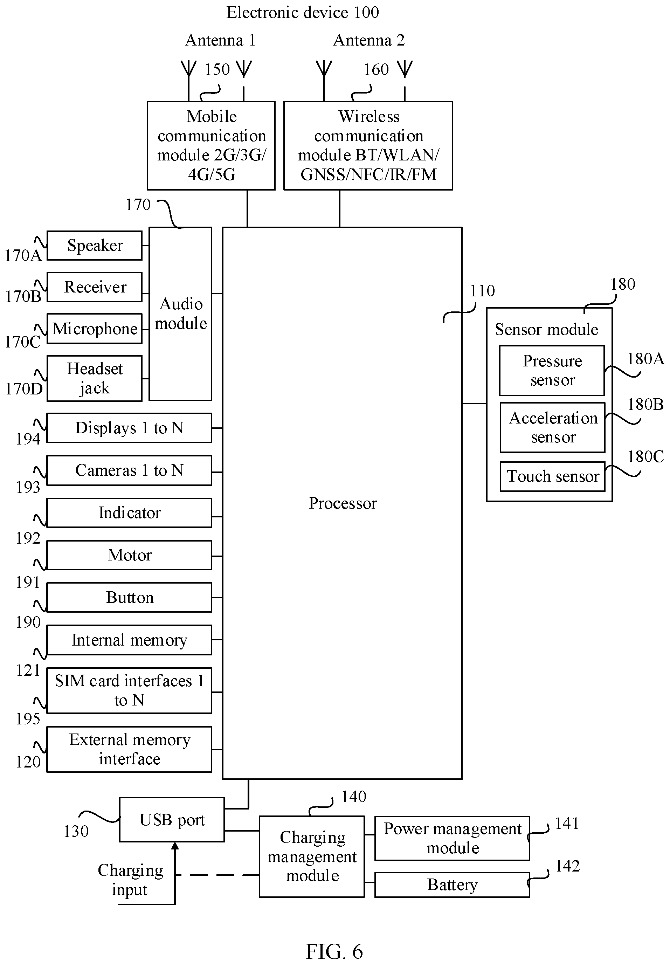

FIG. 6 is a diagram of a structure of an electronic device 100 according to an embodiment of this application. As shown in FIG. 6, the electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on an instruction operation code and a time sequence signal, to complete control of instruction fetching and instruction execution. A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB port 130 is a port that conforms to a USB standard specification, and may be specifically a mini USB port, a micro USB port, a USB Type-C port, or the like. The USB port 130 may be configured to connect to a charger to charge the electronic device 100, or may be configured to transmit data between the electronic device 100 and a peripheral device. The charging management module 140 is configured to receive a charging input from the charger. The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave by using the antenna 1 for radiation. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processor module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave by using the antenna 2 for radiation.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The display 194 is configured to display a display interface of an application, for example, display a display page of an application installed on the electronic device 100. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The camera 193 is configured to capture a static image or a video. An optical image of an object is generated through the lens, and is projected onto a photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, software code of at least one application, and the like. The data storage area may store data (for example, a captured image or a recorded video) and the like generated when the electronic device 100 is used. In addition, the internal memory 121 may include a high-speed random access memory, and may further include a nonvolatile memory, for example, at least one magnetic disk storage device, a flash storage device, a universal flash storage (universal flash storage, UFS), and the like.

The external memory interface 120 may be configured to connect to an external storage card, for example, a Micro SD card, to extend a storage capability of the electronic device. The external storage card communicates with the processor 110 through the external memory interface 120, to implement a data storage function. For example, files such as pictures and videos are stored in the external storage card.

The electronic device 100 may implement an audio function such as music playing or recording by using the audio module 170, the speaker 170A, the receiver 170B, the microphone 170C, the headset jack 170D, the application processor, and the like.

The sensor module 180 may include a pressure sensor 180A, an acceleration sensor 180B, a touch sensor 180C, and the like.

The pressure sensor 180A is configured to sense a pressure signal, and may convert the pressure signal into an electrical signal. In some embodiments, the pressure sensor 180A may be disposed on the display 194.

The touch sensor 180C is also referred to as a "touch panel". The touch sensor 180C may be disposed on the display 194, and the touch sensor 180C and the display 194 form a touchscreen, which is also referred to as a "touchscreen". The touch sensor 180C is configured to detect a touch operation performed on or near the touch sensor 180C. The touch sensor may transfer the detected touch operation to the application processor, to determine a type of a touch event. A visual output related to the touch operation may be provided by using the display 194. In some other embodiments, the touch sensor 180C may alternatively be disposed on a surface of the electronic device 100 at a location different from that of the display 194.

The button 190 includes a power button, a volume button, and the like. The button 190 may be a mechanical button, or may be a touch button. The electronic device 100 may receive a key input, and generate a key signal input related to a user setting and function control of the electronic device 100. The motor 191 may generate a vibration prompt. The motor 191 may be configured to provide an incoming call vibration prompt, or may be configured to provide a touch vibration feedback. For example, touch operations performed on different applications (for example photographing and audio play) may correspond to different vibration feedback effect. Touch vibration feedback effect may further be customized. The indicator 192 may be an indicator lamp, and may indicate a charging status or a power change; or may be configured to indicate a message, a missed call, a notification, and the like. The SIM card interface 195 is configured to connect to an SIM card. The SIM card may be inserted into the SIM card interface 195 or removed from the SIM card interface 195, to implement contact with or separation from the electronic device 100.

It can be understood that the components shown in FIG. 6 do not constitute a specific limitation on the electronic device 100. The electronic device may further include more or fewer components than those shown in the figure, or combine some components, or split some components, or have different component arrangements. In addition, a combination/connection relationship between the components in FIG. 6 may also be adjusted and modified.

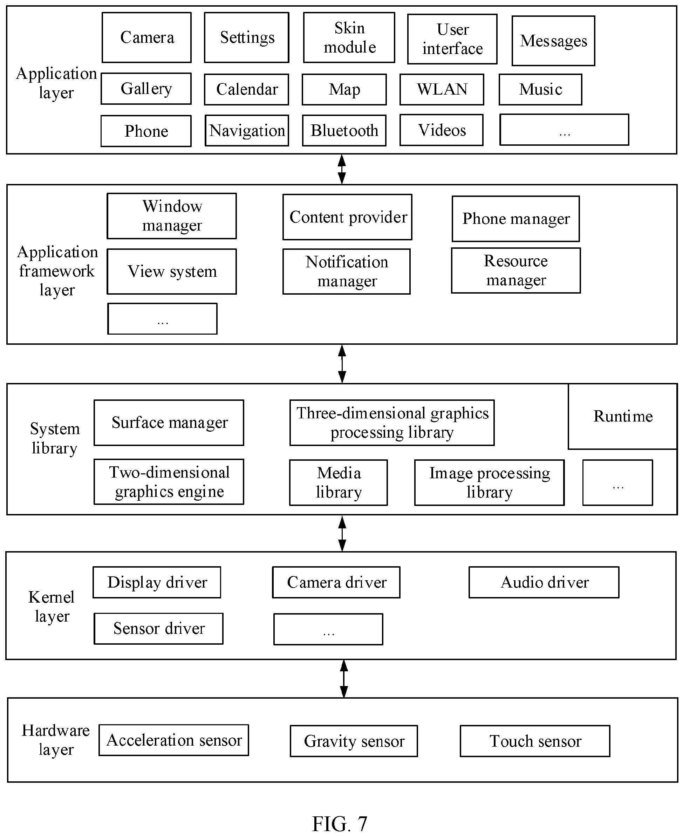

FIG. 7 is a block diagram of a software structure of an electronic device according to an embodiment of this application. As shown in FIG. 7, the software structure of the electronic device may be a layered architecture. For example, software may be divided into several layers, and each layer has a clear role and task. The layers communicate with each other through software interfaces. In some embodiments, an operating system is divided into four layers: an application layer, an application framework (framework, FWK) layer, a runtime (runtime) and system library, and a kernel layer from top to bottom.

The application layer may include a series of application packages (application package). As shown in FIG. 7, the application layer may include Camera, Settings, a skin module, a user interface (user interface, UI), a third-party application, and the like. The third-party application may include Gallery, Calendar, Phone, Map, Navigation, WLAN, Bluetooth, Music, Videos, Messages, and the like. In this embodiment of this application, the application layer may include a target installation package, of a target application, requested by the electronic device from a server to download, and a function file and a layout file in the target installation package adapt to the electronic device.

The application framework layer provides an application programming interface (application programming interface, API) and a programming framework for an application at the application layer. The application framework layer may include some predefined functions. As shown in FIG. 7, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying text and a control for displaying an image. The view system may be configured to construct an application. A display interface may include one or more views. For example, a display interface including a Messages notification icon may include a text display view and an image display view.

The phone manager is configured to provide a communication function of the electronic device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application that is run on the background, or may be a notification that appears on the screen in a form of a dialog window. For example, text information is prompted in the status bar, a prompt tone is produced, the electronic device vibrates, or an indicator light blinks.

The runtime includes a core library and a virtual machine. The runtime is responsible for scheduling and management of the operating system.

The core library includes two parts: a performance function that needs to be invoked by a Java language and the core library of the operating system. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), a two-dimensional graphics engine (for example, SGL), and an image processing library.

The surface manager is configured to: manage a display subsystem, and provide fusion of 2D and 3D layers for a plurality of applications.

The media library supports playback and recording of audio and videos in a plurality of commonly used formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The hardware layer may include various sensors, such as an acceleration sensor, a gravity sensor, and a touch sensor.

It should be noted that structures shown in FIG. 6 and FIG. 7 are merely examples of the electronic device provided in embodiments of this application, and are not intended to impose any limitation on the electronic device provided in embodiments of this application. In specific implementation, the electronic device may have more or fewer components or modules than those in the structure shown in FIG. 6 or FIG. 7.

The following describes the application development method provided in embodiments of this application.

In embodiments of this application, a first electronic device may be a front-end development device used by a developer, and a second electronic device may be an electronic device used by a user. A server may be a cloud server of an application market.

The first electronic device may send an original installation package of a target application to the server, to release the target application on the application market. The original installation package of the target application indicates a function corresponding to at least one type of device information and/or a page layout corresponding to at least one type of device information. For example, the original installation package of the target application may include function parameters corresponding to a plurality of types of device information and/or layout files corresponding to a plurality of types of device information. The device information may include a device type, a screen parameter, and the like. The screen parameter may include at least one of parameters such as a screen shape, a screen size, and a screen resolution of the electronic device.

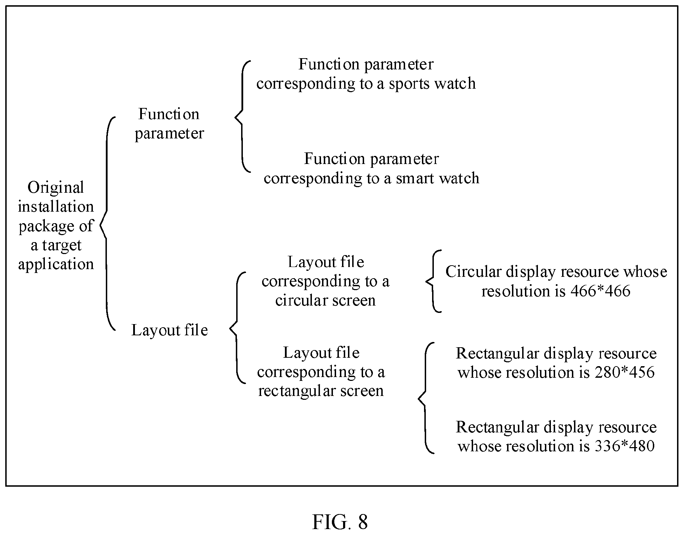

For example, FIG. 8 is a diagram of a structure of an original installation package of a target application according to an embodiment of this application. Refer to FIG. 8. The original installation package of the target application may include function parameters corresponding to a plurality of device types. If the device types include two types: a sports watch and a smart watch, the original installation package includes the function parameter corresponding to the sports watch and the function parameter corresponding to the smart watch.

In addition, refer to FIG. 8. The original installation package of the target application may further include layout files corresponding to a plurality of types of screen parameters, and the layout file may further include display resources. As shown in FIG. 8, the original installation package of the target application includes the layout file corresponding to a circular screen and the layout file corresponding to a rectangular screen. The layout file of the target application may further include the display resources corresponding to different screen resolutions. For example, the layout file of the target application includes a display resource of a circular screen whose resolution is 466*466, a display resource of a rectangular screen whose resolution is 280*456, and a display resource of a rectangular screen whose resolution is 336*480.

It should be noted that the function parameters corresponding to a plurality of types of device information included in the original installation package of the target application may be code logic blocks corresponding to the plurality of types of device information, and the code logic block is computer instructions/a computer program that can be executed by an electronic device. After the server notes a syntax of the code logic block, and dynamically splits and compiles the code logic block, a function file can be generated. The original installation package can define the code logic block corresponding to the device information. For example, an example in which the device types are the sports watch and the smart watch is used. Environment variables are declared in the original installation package. For example, the sports watch is LITE_WEARABLE, and the smart watch is WEARABLE. In this case, the function parameter of the device type LITE_WEARABLE is defined in the original installation package, and the function parameter of the device type WEARABLE is defined, to distinguish function parameters corresponding to different device types.

In addition, the original installation package of the target application further includes the layout files corresponding to the plurality of types of device information, and the server can invoke the layout file by invoking a function.

After receiving the original installation package, of the target application, sent by the first electronic device, the server dynamically splits and compiles the original installation package based on the syntax notation in the original installation package, to obtain at least one target installation package, where the at least one target installation package one-to-one corresponds to at least one type of device information, and each target installation package has a function and/or a page layout corresponding to one type of device information.

In some embodiments of this application, each target installation package determined by the server may include a function file and/or a layout file. Optionally, the layout file may further include a display resource of the target application.

In an optional implementation, the server may determine, based on the syntax notation in the original installation package, a function parameter corresponding to each type of device information. For example, the server may enable a tree shaking function in Webpack. The tree shaking function may automatically eliminate a parameter other than a function parameter corresponding to target device information, and package the obtained function parameter corresponding to the target device information, to generate a function file corresponding to the target device information.

The server may further invoke, by invoking a function, a layout file corresponding to the target device information, and package the obtained function file and the layout file corresponding to the target device information, to generate a target installation package corresponding to the target device information.

For example, a layout file corresponding to each type of device information may be defined in the original installation package. For example, different device information corresponds to different targets, and different layout files are defined under the targets. For example, the layout file may be cascading style sheets (cascading style sheets, CSS) file/hypertext markup language (hypertext markup language, HTML) file. When generating the target installation package, the server generates different config.j son files for the different targets, and the server may invoke the ace-loader a plurality of times, to separately transfer the different config.j son files, so as to generate target installation packages corresponding to different device information.

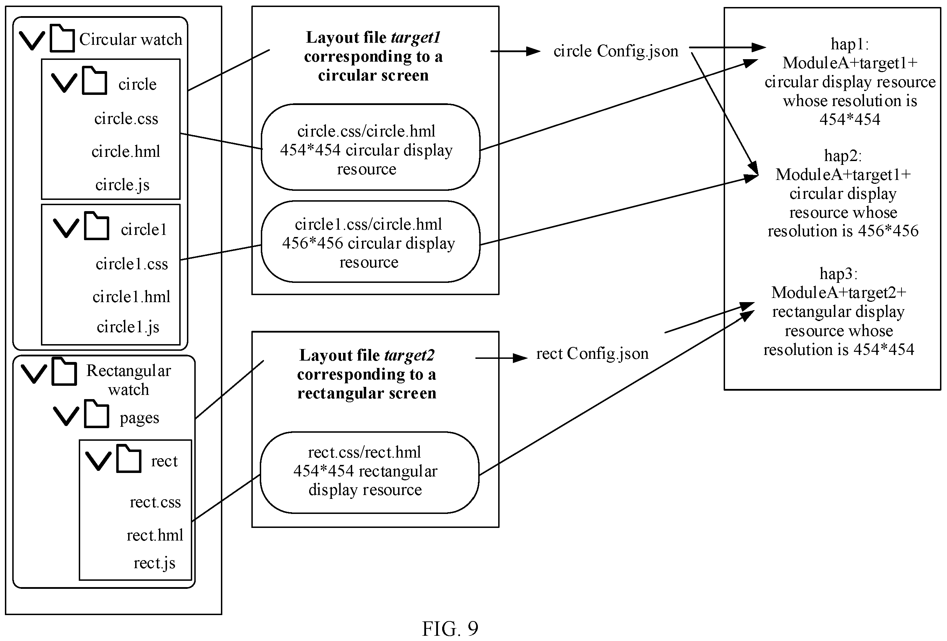

In embodiments of this application, a same electronic device may support layout files corresponding to a plurality of types of screen resolutions, and a target installation package corresponding to device information of the electronic device may include the layout files corresponding to the plurality of types of screen resolutions. FIG. 9 is a diagram of a manner of generating the target installation package according to this embodiment of this application. Refer to FIG. 9. It is assumed that a function file corresponding to the device information is ModlueA, a screen parameter in the device information includes two types of screen shapes: circular and rectangular, the circular screen shape includes two types of resolutions: 454*454 and 456*456, and the rectangular screen includes a resolution of 454*454. The server generates target1 for the circular screen, and generates a circle Config.j son file for the target!. The server generates target2 for the rectangular screen, and generates a rect Config.json file for the target2. The target installation package corresponding to the device information is generated based on the function file and the layout file corresponding to the device information. Refer to FIG. 9. The target installation package corresponding to the device information includes three hap packages. A hap1 package includes the function file ModlueA, the layout file target!, and a display resource corresponding to the circular screen whose resolution is 454*454. A hap2 package includes the function file ModlueA, the layout file target!, and a display resource corresponding to the circular screen whose resolution is 456*456. A hap3 package includes the function file ModlueA, the layout file target2, and a display resource corresponding to the rectangular screen whose resolution is 454*454.

The user may trigger the second electronic device to run an application market client. Optionally, the second electronic device may send device information of the second electronic device to the server. The server may determine, based on the device information of the second electronic device, information of an application whose running is supported by the second electronic device, and send, to the second electronic device, the information of the application whose running is supported by the second electronic device. The second electronic device may display, on the application market client, the information of the application whose running is supported by the second electronic device. For example, the information of the application may include information such as an installation package name, an application icon, and an application overview of the application. The user may operate the second electronic device, and search for the target application on the application market client installed on the second electronic device. The second electronic device may send a first download request to the server, where the first download request is used to request to download an installation package of the target application.

After receiving the first download request sent by the second electronic device, the server may determine a first installation package based on the device information of the second electronic device, where the first installation package is a target installation package corresponding to the device information of the second electronic device. The server sends the first installation package to the second electronic device.

After receiving the first installation package sent by the server, the second electronic device may download and install the first installation package, so that the second electronic device locally installs the target application, or the second electronic device displays a service widget of the target application based on the first installation package.

Optionally, the server may further receive device information of a third electronic device sent by the third electronic device, and send, to the third electronic device, information of an application whose running is supported by the third electronic device. The user may trigger the third electronic device to send a second download request to the server, where the second download request is used to request to download an installation package of the target application. The server determines a second installation package based on the device information of the third electronic device, where the second installation package is a target installation package corresponding to the device information of the third electronic device. The server sends the second installation package to the third electronic device. It can be learned from the foregoing description that the first installation package is different from the second installation package. That the first installation package is different from the second installation package may include at least one of the following conditions: A data amount of the first installation package is different from a data amount of the second installation package; a function file or a layout file included in the first installation package is different from a function file or a layout file included in the second installation package, for example, a display resource in the layout file included in the first installation package is different from a display resource in the layout file included in the second installation package; and a package name of the first installation package is different from a package name of the second installation package.

According to the application development method provided in embodiments of this application, the developer may directly upload the original installation package of the target application to the server by using the first electronic device, and the server splits and compiles the original installation package, to generate the target installation package corresponding to each type of device information, thereby reducing development costs, and implementing the application development method of one-time development for multi-device deployment. When the second electronic device requests to download the target application from the server, the server may send, to the second electronic device, the target installation package corresponding to the device information of the second electronic device, so that the target installation package, of the target application, obtained by the second electronic device is an application installation package matching the second electronic device. The target installation package includes only the function file and the layout file that correspond to the device information of the second electronic device, thereby avoiding a waste of storage resources of the second electronic device. Therefore, a lightweight device with limited storage space can also normally download and run the target application, which facilitates ecological development of an operating system.

The following further describes the application development method provided in embodiments of this application by using two specific examples.

### Example 1

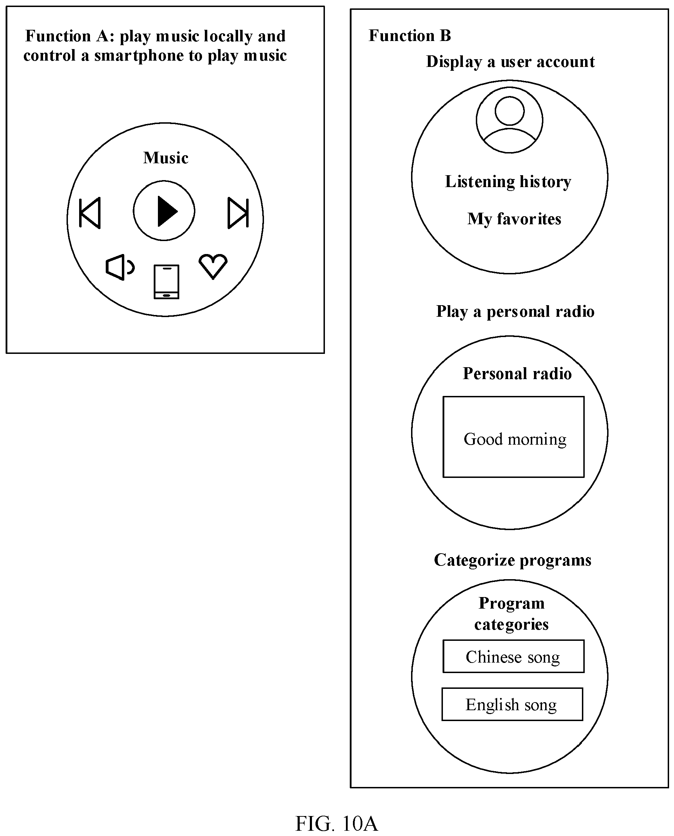

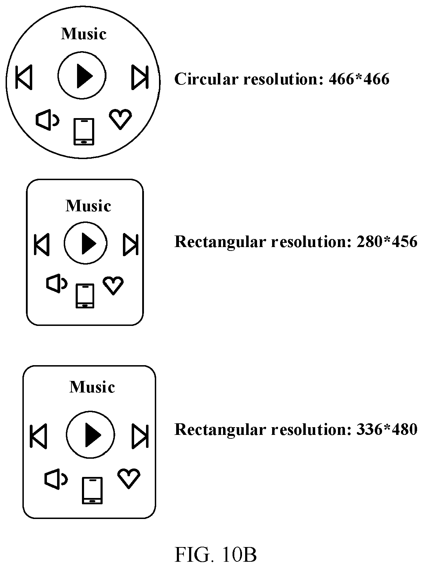

For example, a developer develops a music application. When designing the music application, the developer may design functions and display resources corresponding to various types of devices. For example, the music application can support two types of devices: a sports watch and a smart watch. Refer to FIG. 10A. Both the sports watch and the smart watch can support a function A: Play music locally and control a smartphone to play music. The smart watch also supports a function B: Display a user account, play a personal radio, and categorize programs. Refer to FIG. 10B. The display resource of the music application includes a circular watch face resource whose resolution is 466*466, a rectangular watch face resource whose resolution is 280*456, and a rectangular watch face resource whose resolution is 336*480.

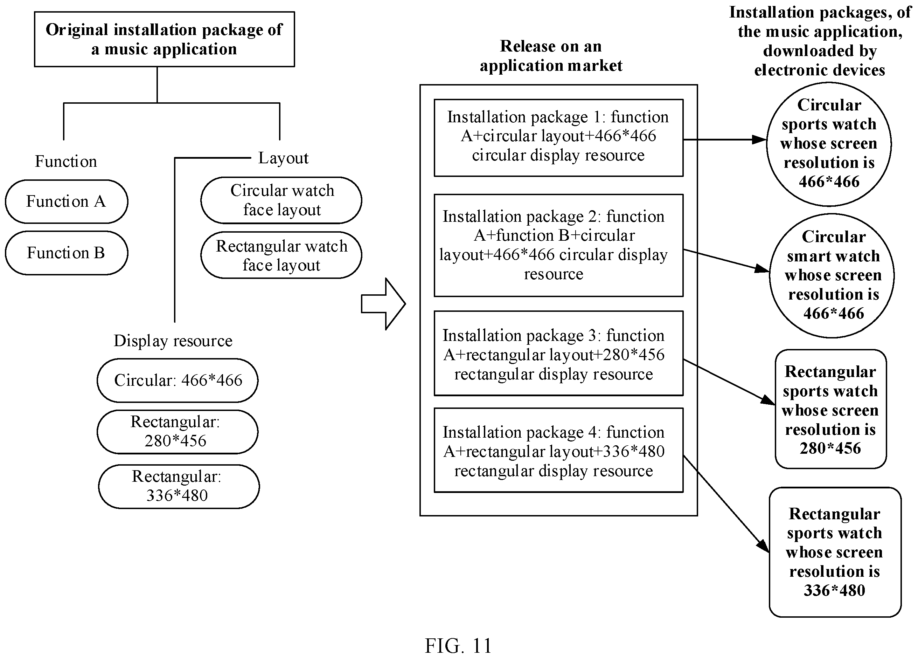

The developer sends an original installation package of the music application to a server by using a first electronic device, the server may determine at least one target installation package based on the original installation package of the music application, and each target installation package corresponds to a piece of device information. For example, FIG. 11 is a diagram in which the server determines the at least one target installation package according to this embodiment of this application. Refer to FIG. 11. The original installation package of the music application includes a function parameter corresponding to the function A of the music application, a function parameter corresponding to the function B, a circular watch face layout file, a rectangular watch face layout file, the circular watch face display resource whose resolution is 466*466, the rectangular watch face display resource whose resolution is 280*456, and the rectangular watch face display resource whose resolution is 336*480. The server dynamically splits and compiles the original installation package, to obtain four types of target installation packages shown in FIG. 11: an installation package 1 to an installation package 4. The installation package 1 includes a function file corresponding to the function A, the circular watch face layout file, and the circular watch face display resource whose resolution is 466*466. The installation package 2 includes the function file corresponding to the function A, a function file corresponding to the function B, the circular watch face layout file, and the circular watch face display resource whose resolution is 466*466. The installation package 3 includes the function file corresponding to the function A, the rectangular watch face layout file, and the rectangular watch face display resource whose resolution is 280*456. The installation package 4 includes the function file corresponding to the function A, the rectangular watch face layout file, and the rectangular watch face display resource whose resolution is 336*480.

The server may receive device information sent by each electronic device, and send, to each electronic device based on the device information of each electronic device, information of an application whose running is supported by each electronic device, to push the music application to application market clients of different devices. A user may operate a second electronic device to trigger downloading of the music application on an application market client. The second electronic device sends a download request to the server, and the server sends, to the second electronic device, a target installation package corresponding to device information of the second electronic device. The second electronic device downloads and installs the target installation package of the music application applicable to the second electronic device. As shown in FIG. 11, a target installation package, of the music application, downloaded by a circular sports watch whose screen resolution is 466*466 is the installation package 1, a target installation package, of the music application, downloaded by a circular smart watch whose screen resolution is 466*466 is the installation package 2, a target installation package, of the music application, downloaded by a rectangular sports watch whose screen resolution is 280*456 is the installation package 3, and a target installation package, of the music application, downloaded by a rectangular sports watch whose screen resolution is 336*480 is the installation package 4.

### Example 2

For example, a developer develops a service widget of a weather application. When designing an installation package of the service widget of the weather application, the developer may design functions and display resources corresponding to various types of devices. For example, the developer can design service widgets that support two types of devices: a smartphone and a smart watch. Both the smartphone and the smart watch support a function A: Display a weather condition on the day based on positioning information. The smartphone also supports a function B: Display weather conditions in a coming week. The smartphone supports display of a 4*4 display resource, and the smart watch supports display of a circular watch face display resource whose resolution is 466*466.

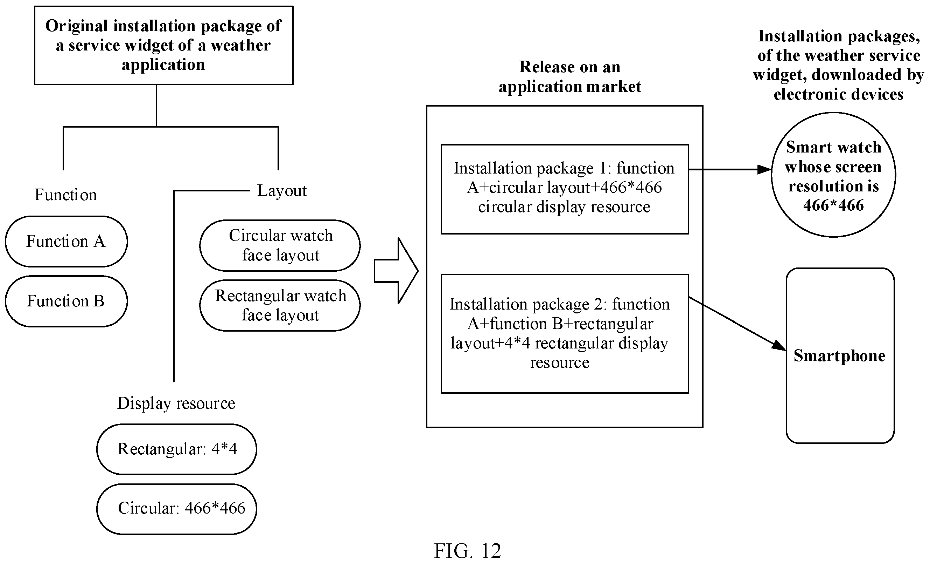

The developer sends an original installation package of the service widget of the weather application to a server by using a first electronic device, the server may determine at least one target installation package based on the original installation package, and each target installation package corresponds to a piece of device information. For example, FIG. 12 is a diagram in which the server determines the at least one target installation package according to this embodiment of this application. Refer to FIG. 12. The original installation package of the service widget of the weather application includes a function parameter corresponding to the function A, a function parameter corresponding to the function B, a circular watch face layout file, a rectangular layout file, the circular watch face display resource whose resolution is 466*466, and the 4*4 rectangular display resource. The server dynamically splits and compiles the original installation package, to obtain two types of target installation packages shown in FIG. 12: an installation package 1 and an installation package 2. The installation package 1 includes a function file corresponding to the function A, the circular watch face layout file, and the circular watch face display resource whose resolution is 466*466. The installation package 2 includes the function file corresponding to the function A, a function file corresponding to the function B, the rectangular layout file, and the 4*4 rectangular display resource.

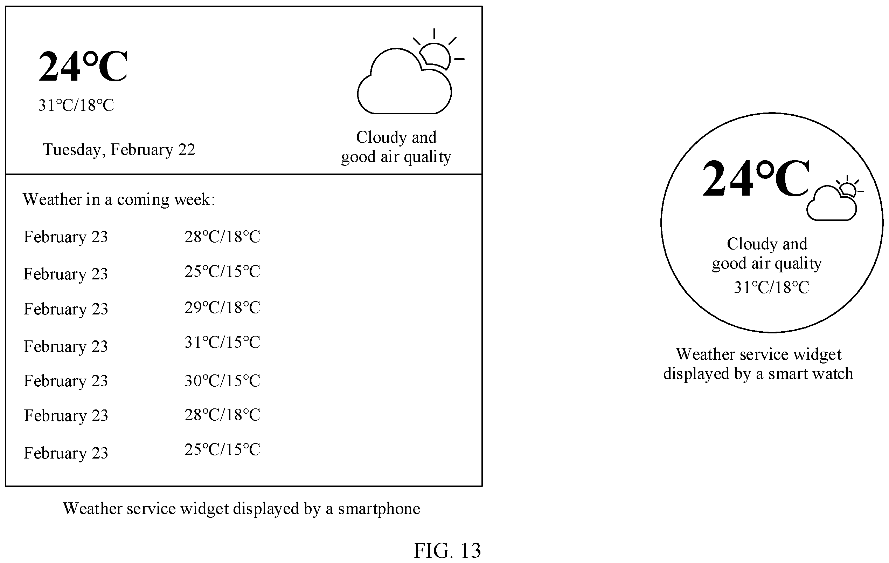

When a user adds the weather service widget to the smartphone or the smart watch, the smartphone or the smart watch sends a download request to the server. Optionally, the download request may include device information of the device that sends the download request, or the smartphone or the smart watch may send the device information to the server in advance. The server may determine, based on the device information, a target installation package corresponding to the device information, and return the target installation package to the device that sends the download request. After receiving the target installation package sent by the server, the smartphone or the smart watch downloads and installs the target installation package, and displays the weather service widget on the screen. For example, FIG. 13 is a diagram of weather service widgets displayed on the smartphone and the smart watch according to this embodiment of this application. Refer to FIG. 13. The weather service widget displayed on the smartphone is square, and may display weather conditions on the day and in a coming week in a region in which the smartphone is located. The weather service widget displayed on the smart watch is circular, and may display a weather condition on the day in a region in which the smart watch is located.

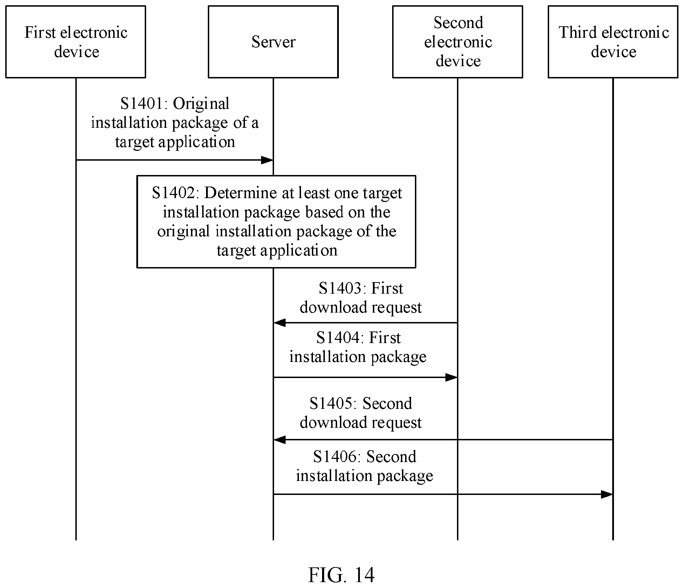

Based on the foregoing embodiments, this application further provides an application development method. The application development method may be applied to the application development system shown in FIG. 1. FIG. 14 is a flowchart of the application development method according to an embodiment of this application. Refer to FIG. 14. The method includes the following steps:
S1401: A first electronic device sends an original installation package of a target application to a server, where
   the original installation package of the target application indicates a function corresponding to at least one type of device information and/or a page layout corresponding to at least one type of device information;
S1402: The server determines at least one target installation package based on the original installation package of the target application, where
   the at least one target installation package one-to-one corresponds to the at least one type of device information, and each target installation package has a function and/or a page layout corresponding to one type of device information;
S1403: A second electronic device sends a first download request to the server, where
   the first download request is used to request to download an installation package of the target application;
S1404: The server sends a first installation package to the second electronic device, where
   the first installation package is a target installation package that is in the at least one target installation package and that corresponds to device information of the second electronic device;
S1405: A third electronic device sends a second download request to the server, where
   the second download request is used to request to download an installation package of the target application; and
S1406: The server sends a second installation package to the third electronic device, where
   the second installation package is a target installation package that is in the at least one target installation package and that corresponds to device information of the third electronic device.

It should be noted that, for specific implementation of the application development method shown in FIG. 14 of this application, refer to the foregoing embodiments of this application. Repeated parts are not described again.

Based on the foregoing embodiments, this application further provides an electronic device. The electronic device includes a plurality of functional modules, and the plurality of functional modules interact with each other to implement functions performed by the second electronic device or the third electronic device in the methods described in embodiments of this application, for example, perform S 1403 performed by the second electronic device in the embodiment shown in FIG. 14, or perform S 1405 performed by the third electronic device in the embodiment shown in FIG. 14. The plurality of functional modules may be implemented based on software, hardware, or a combination of software and hardware, and the plurality of functional modules may be randomly combined or divided based on specific implementation.

Based on the foregoing embodiments, this application further provides an electronic device. The electronic device includes at least one processor and at least one memory, the at least one memory stores computer program instructions, and when the electronic device runs, the at least one processor performs functions performed by the second electronic device or the third electronic device in the methods described in embodiments of this application, for example, performs S1403 performed by the second electronic device in the embodiment shown in FIG. 14, or performs S 1405 performed by the third electronic device in the embodiment shown in FIG. 14.

Based on the foregoing embodiments, this application further provides a server. The server includes a plurality of functional modules, and the plurality of functional modules interact with each other to implement functions performed by the server in the methods described in embodiments of this application, for example, perform S1402, S1404, and S 1406 performed by the server in the embodiment shown in FIG. 14. The plurality of functional modules may be implemented based on software, hardware, or a combination of software and hardware, and the plurality of functional modules may be randomly combined or divided based on specific implementation.

Based on the foregoing embodiments, this application further provides a server. The server includes at least one processor and at least one memory, the at least one memory stores computer program instructions, and when the server runs, the at least one processor performs functions performed by the server in the methods described in embodiments of this application, for example, performs S1402, S1404, and S 1406 performed by the server in the embodiment shown in FIG. 14.

Based on the foregoing embodiments, this application further provides a computer program. When the computer program is run on a computer, the computer is enabled to perform the methods described in embodiments of this application.

Based on the foregoing embodiments, this application further provides a computer-readable storage medium. The computer-readable storage medium stores a computer program, and when the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip or may include a chip and another discrete component.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may alternatively be stored in a computer-readable memory that can indicate a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims and their equivalent technologies.

## Claims

1. An application development system, wherein the application development system comprises a first electronic device, a second electronic device, a third electronic device, and a server;
the first electronic device is configured to send an original installation package of a target application to the server, and the original installation package of the target application indicates a function corresponding to at least one type of device information and/or a page layout corresponding to at least one type of device information;
the server is configured to: receive the original installation package, of the target application, sent by the first electronic device, and determine at least one target installation package based on the original installation package, wherein the at least one target installation package one-to-one corresponds to the at least one type of device information, and each target installation package has a function and/or a page layout corresponding to one type of device information; receive a first download request sent by the second electronic device, wherein the first download request is used to request to download an installation package of the target application; send a first installation package to the second electronic device, wherein the first installation package is a target installation package that is in the at least one target installation package and that corresponds to device information of the second electronic device; receive a second download request sent by the third electronic device, wherein the second download request is used to request to download an installation package of the target application; and send a second installation package to the third electronic device, wherein the second installation package is a target installation package that is in the at least one target installation package and that corresponds to device information of the third electronic device;
the second electronic device is configured to: send the first download request to the server, and receive the first installation package sent by the server; and
the third electronic device is configured to: send the second download request to the server, and receive the second installation package sent by the server.

2. The system according to claim 1, wherein the first installation package and the second installation package satisfy at least one of the following conditions:
a data amount of the first installation package is different from a data amount of the second installation package;
a package name of the first installation package is different from a package name of the second installation package;
a function file in the first installation package is different from a function file in the second installation package; and
a layout file in the first installation package is different from a layout file in the second installation package.

3. The system according to claim 1 or 2, wherein
the second electronic device is further configured to:
before sending the first download request to the server, send the device information of the second electronic device to the server, and receive information that is sent by the server and that is of an application whose running is supported by the second electronic device; and display the information of the application whose running is supported by the second electronic device;
the third electronic device is further configured to:
before sending the second download request to the server, send the device information of the third electronic device to the server, and receive information that is sent by the server and that is of an application whose running is supported by the third electronic device; and display the information of the application whose running is supported by the third electronic device; and
the server is further configured to:
receive the device information of the second electronic device sent by the second electronic device, and send, to the second electronic device, the information of the application whose running is supported by the second electronic device; and receive the device information of the third electronic device sent by the third electronic device, and send, to the third electronic device, the information of the application whose running is supported by the third electronic device.

4. The system according to any one of claims 1 to 3, wherein the server is specifically configured to: split and compile the original installation package based on a syntax notation in the original installation package, to obtain the at least one target installation package.

5. The system according to claim 4, wherein the first installation package comprises a function file corresponding to the device information of the second electronic device and/or a layout file corresponding to the device information of the second electronic device, and the layout file corresponding to the device information of the second electronic device comprises a display resource corresponding to the device information of the second electronic device; and
the second installation package comprises a function file corresponding to the device information of the third electronic device and/or a layout file corresponding to the device information of the third electronic device, and the layout file corresponding to the device information of the third electronic device comprises a display resource corresponding to the device information of the third electronic device.

6. The system according to any one of claims 1 to 5, wherein the device information comprises at least one of a device type and a screen parameter.

7. The system according to claim 6, wherein the screen parameter comprises at least one of a screen shape, a screen size, and a screen resolution.

8. The system according to any one of claims 1 to 7, wherein
the second electronic device is further configured to:
after receiving the first installation package sent by the server, download the first installation package, and install the target application on the second electronic device based on the first installation package; or
after receiving the first installation package sent by the server, download the first installation package, and display a service widget of the target application on the second electronic device based on the first installation package; and
the third electronic device is further configured to:
after receiving the second installation package sent by the server, download the second installation package, and install the target application on the third electronic device based on the second installation package; or
after receiving the second installation package sent by the server, download the second installation package, and display a service widget of the target application on the third electronic device based on the second installation package.

9. The system according to any one of claims 1 to 8, wherein the second electronic device is any one of an intelligent terminal device, an intelligent wearable device, a light intelligent wearable device, an internet of things device, or an intelligent vehicle-mounted device; and the third electronic device is any one of an intelligent terminal device, an intelligent wearable device, a light intelligent wearable device, an internet of things device, or an intelligent vehicle-mounted device.

10. An application development method, applied to an electronic device, wherein the method comprises:
sending a first download request to a server, wherein the first download request is used to request to download an installation package of a target application; and
receiving a first installation package sent by the server, wherein the first installation package is a target installation package corresponding to device information of the electronic device, and the target installation package is determined by the server based on an original installation package of the target application.

11. The method according to claim 10, wherein before the sending a first download request to a server, the method further comprises:
sending the device information of the electronic device to the server, and receiving information that is sent by the server and that is of an application whose running is supported by the electronic device; and
displaying the information of the application whose running is supported by the electronic device.

12. The method according to claim 10 or 11, wherein the first installation package comprises a function file corresponding to the device information of the electronic device and/or a layout file corresponding to the device information of the electronic device, and the layout file corresponding to the device information of the electronic device comprises a display resource corresponding to the device information of the electronic device.

13. The method according to any one of claims 10 to 12, wherein the device information comprises at least one of a device type and a screen parameter.

14. The method according to claim 13, wherein the screen parameter comprises at least one of a screen shape, a screen size, and a screen resolution.

15. The method according to any one of claims 10 to 14, wherein after the receiving a first installation package sent by the server, the method further comprises:
downloading the first installation package, and installing the target application on the electronic device based on the first installation package; or
downloading the first installation package, and displaying a service widget of the target application on the electronic device based on the first installation package.

16. An application development method, applied to a server, wherein the method comprises:
receiving an original installation package, of a target application, sent by a first electronic device, wherein the original installation package of the target application indicates a function corresponding to at least one type of device information and/or a page layout corresponding to at least one type of device information;
determining at least one target installation package based on the original installation package, wherein the at least one target installation package one-to-one corresponds to the at least one type of device information, and each target installation package has a function and/or a page layout corresponding to one type of device information;
receiving a first download request sent by a second electronic device, wherein the first download request is used to request to download an installation package of the target application; and sending a first installation package to the second electronic device, wherein the first installation package is a target installation package that is in the at least one target installation package and that corresponds to device information of the second electronic device; and
receiving a second download request sent by a third electronic device, wherein the second download request is used to request to download an installation package of the target application, and sending a second installation package to the third electronic device, wherein the second installation package is a target installation package that is in the at least one target installation package and that corresponds to device information of the third electronic device.

17. The method according to claim 16, wherein the first installation package and the second installation package satisfy at least one of the following conditions:
a data amount of the first installation package is different from a data amount of the second installation package;
a package name of the first installation package is different from a package name of the second installation package;
a function file in the first installation package is different from a function file in the second installation package; and
a layout file in the first installation package is different from a layout file in the second installation package.

18. The method according to claim 16 or 17, wherein the method further comprises:
receiving the device information of the second electronic device sent by the second electronic device, and sending, to the second electronic device, information of an application whose running is supported by the second electronic device; and
receiving the device information of the third electronic device sent by the third electronic device, and sending, to the third electronic device, information of an application whose running is supported by the third electronic device.

19. The method according to either of claims 16 and 17, wherein the determining at least one target installation package based on the original installation package comprises: splitting and compiling the original installation package based on a syntax notation in the original installation package, to obtain the at least one target installation package.

20. The method according to claim 19, wherein the first installation package comprises a function file corresponding to the device information of the second electronic device and/or a layout file corresponding to the device information of the second electronic device, and the layout file corresponding to the device information of the second electronic device comprises a display resource corresponding to the device information of the second electronic device; and
the second installation package comprises a function file corresponding to the device information of the third electronic device and/or a layout file corresponding to the device information of the third electronic device, and the layout file corresponding to the device information of the third electronic device comprises a display resource corresponding to the device information of the third electronic device.

21. The method according to any one of claims 16 to 20, wherein the device information comprises at least one of a device type and a screen parameter.

22. The method according to claim 21, wherein the screen parameter comprises at least one of a screen shape, a screen size, and a screen resolution.

23. An electronic device, comprising at least one processor, wherein the at least one processor is coupled to at least one memory, and the at least one processor is configured to read a computer program stored in the at least one memory, to perform the method according to any one of claims 10 to 15.

24. An electronic device, comprising a plurality of functional modules, wherein the plurality of functional modules interact with each other to implement the method according to any one of claims 10 to 15.

25. A server, comprising at least one processor, wherein the at least one processor is coupled to at least one memory, and the at least one processor is configured to read a computer program stored in the at least one memory, to perform the method according to any one of claims 16 to 22.

26. A server, comprising a plurality of functional modules, wherein the plurality of functional modules interact with each other to implement the method according to any one of claims 16 to 22.

27. A computer-readable storage medium, wherein the computer-readable storage medium stores instructions, and when the instructions are run on a computer, the computer is enabled to perform the method according to any one of claims 10 to 15, or perform the method according to any one of claims 16 to 22.

28. A computer program, wherein when the computer program is run on a computer, the computer is enabled to perform the method according to any one of claims 10 to 15, or perform the method according to any one of claims 16 to 22.
